(19) Europäisches Patentamt
European Patent Office
Office européen des brevets

(11) Numéro de publication : **0 109 900**
**B1**

(12) **FASCICULE DE BREVET EUROPÉEN**

(45) Date de publication du fascicule du brevet : **08.07.87**

(51) Int. Cl.[4] : **D 21 D 3/00**, D 21 C 5/02

(21) Numéro de dépôt : **83402205.5**

(22) Date de dépôt : **16.11.83**

(54) **Procédé pour la fabrication de papiers contenant du latex et feuilles de papier ainsi obtenues.**

(30) Priorité : **17.11.82 US 442621**

(43) Date de publication de la demande : **30.05.84 Bulletin 84/22**

(45) Mention de la délivrance du brevet : **08.07.87 Bulletin 87/28**

(84) Etats contractants désignés : **AT BE CH DE FR GB IT LI LU NL SE**

(56) Documents cités :
**EP-A- 0 067 076**
**FR-E- 58 620**
**US-A- 2 563 897**
**US-A- 2 601 597**
**US-A- 2 657 991**
**US-A- 3 873 411**
**ABSTRACT BULLETIN OF THE INSTITUTE OF PAPER CHEMISTRY, vol. 51, no. 3, septembre 1980, page 304, abrégé no. 2678, Appleton, Wisconsin, US**
**TAPPI, vol. 60, no. 7, juillet 1977, pages 113-114, Atlanta, GA., US**
**TAPPI, vol. 62, no. 2, février 1979, pages 43-46, Atlanta, GA., US**
**TAPPI, vol. 61, no. 11, novembre 1978, pages 111-114, Atlanta, GA., US**

(73) Titulaire : **PAPETERIES DE JEAND'HEURS**
**Lisle-en-Rigault**
**F-55000 Bar le Duc (FR)**

(72) Inventeur : **Bartelloni, René**
**rue Saint-Jean Lisle-en-Rigault**
**F-55000 Bar le Duc (FR)**

(74) Mandataire : **Bouju, André et al**
**Cabinet Bouju 38 avenue de la Grande Armée**
**F-75017 Paris (FR)**

**EP 0 109 900 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un procédé pour la fabrication d'une feuille de papier contenant du latex, dans lequel on prépare une pâte à base de fibres et de particules de latex qui est ensuite transformée en feuille.

La demande de papiers spéciaux a augmenté depuis de nombreuses années. Ceci est particulièrement vrai pour les papiers résistant à l'eau destinés à la fabrication de papiers abrasifs, de papiers adhésifs, de cuirs artificiels, de papiers et cartons pour la construction et le revêtement, l'isolation, l'emballage, etc. Ce sont principalement des matières polymères qui confèrent à ces papiers spéciaux leur imperméabilité, leur souplesse et/ou leur résistance, et ce sont principalement des résines phénoliques (phénoplastes) et des résines amino (aminoplastes), qui ont permis jusqu'à présent de déposer sur ceux-ci les divers revêtements appropriés dont les fabricants de ces divers papiers spéciaux avaient besoin.

Ainsi, bien que la littérature soit riche en découvertes de procédés divers pour incorporer du latex dans le mélange fibreux introduit dans une machine à papier, et que ces procédés aient été soumis à des essais poussés depuis plus de vingt ans, les résultats obtenus n'ont jamais été satisfaisants du point de vue de l'exploitation, et de très nombreuses difficultés économiques et technologiques restent à résoudre, en particulier lorsque la proportion de latex que l'on essaie d'incorporer dépasse 7 à 10 % de la masse fibreuse. C'est pour ces raisons que la technique de post-imprégnation d'une feuille de papier déjà fabriquée est couramment et très largement utilisée.

En conséquence, pour produire ces divers papiers spéciaux, le procédé classiquement utilisé reste toujours le suivant : (1) on fabrique une feuille de papier continue sur une machine à papier et on l'enroule sur un mandrin pour former une bobine ; (2) on introduit ensuite la bobine ainsi obtenue en longueur continue dans une autre machine en une, deux, trois passes ou même davantage en vue de déposer sur une face de la feuille fibreuse ou sur les deux, différentes couches telles que latex, résines, cires, goudrons, etc. C'est seulement alors que la feuille, après un séchage approprié, est enroulée à nouveau sur une bobine. Ainsi, pour obtenir le papier désiré, il est nécessaire de répéter les opérations d'enroulement et de déroulement un grand nombre de fois, en appliquant chaque fois un nouveau revêtement. Ceci augmente évidemment de manière considérable le prix du produit. En outre, il est difficile de conserver la porosité ainsi que le contrôle d'autres propriétés physiques, par la technique d'imprégnation, et on utilise en outre des quantités excessives d'agents d'imprégnation.

Revenant aux nombreux essais effectués dans les vingt dernières années ou davantage pour fabriquer des papiers imprégnés en utilisant un latex au cours de la fabrication initiale de la feuille de papier, l'objectif initial de ceux qui travaillaient dans ce domaine était de provoquer la coagulation du latex et sa précipitation sur les fibres papetières. Malheureusement, lorsque le latex coagule, il se dépose aussi sous forme de perles sur la toile de la machine à papier, et sur les divers récipients et autres appareillages, ce qui rend rapidement le traitement ultérieur difficile, sinon impossible. Ce problème peut aussi être dû en partie à la conservation généralement mauvaise du latex et des autres résines qui peuvent être utilisées. Cependant, bien que l'on ait espéré un abaissement spectaculaire du coût si le latex ou les autres additifs pouvaient être ajoutés dans la masse de la pâte dans la machine à papier, cette simplification de la fabrication, n'a pas été réalisée avec succès jusqu'à présent dans l'industrie, lorsqu'on désire utiliser plus d'environ 7 à 10 % de latex par rapport à la masse fibreuse, et en conséquence on a recours presque invariablement au procédé difficile et coûteux de la post-imprégnation. C'est pour ces raisons que la technique de post-imprégnation d'une feuille déjà fabriquée est actuellement très largement utilisée.

L'US-A-2 563 897 décrit un procédé pour réaliser un produit cellulosique formé dans lequel on prépare une suspension aqueuse de matière fibreuse cellulosique que l'on imprègne d'un agent d'imprégnation organique insoluble dans l'eau et hydrophobe, caractérisé par une première étape d'addition d'une résine colloïdale en solution à base de mélamine-aldéhyde cationique et hydrophyle, puis par l'addition de l'agent d'imprégnation à l'état défloculé, puis cet agent est floculé par l'action de la résine mélamine-aldéhyde.

Ce procédé ne permet pas de contrôler parfaitement la répartition homogène de l'agent d'imprégnation dans la masse fibreuse, ni de créer des liaisons stables entre cet agent et les fibres pour conférer au produit obtenu des propriétés mécaniques optimales.

L'article de Tappi, Vol. 62 n° 2 (février 1979, Atlanta GA US : L.P. Avery « Elevation of retention aids » décrit les effets de l'alun (sulfate d'aluminium) sur la rétention de particules de résine sur les fibres papetières. Cet article montre que quels que soient la concentration d'alun et le pH, le pourcentage des particules retenues sur les fibres n'atteint pas des valeurs très élevées. Cet article montre donc que l'alun ne permet pas de créer des liaisons physico-chimiques fortes entre les fibres et les particules de résine.

L'Abstract n° 2678 du Bulletin of the Institute of Paper Chemistry Vol. 51. Septembre 1980, No 3 Appleton Wisconsin U.S.A. décrit les avantages liés aux mesures du potentiel Zeta dans la fabrication du papier. Ce document toutefois ne révèle pas les conditions qu'il faut remplir pour obtenir des liaisons fortes entre des particules telles que du latex et des fibres papetières.

L'EP-A-0 067 076 de la demanderesse appartenant à l'état de la technique en vertu de l'article 54(3)

de la CBE décrit un procédé qui permet d'obtenir des feuilles de papier au latex dans lesquelles les particules de latex sont uniformément réparties parmi les fibres et fixées à ces dernières par un polyélectrolyte. Les papiers obtenus sont conformes aux objectifs de la présente invention. Toutefois, l'enseignement du document précité porte sur l'utilisation de conditions particulières de pH et ne permet ainsi pas de préparer des feuilles de papier au latex quel que soit le pH du latex utilisé dans la mise en œuvre du procédé.

En conséquence, un des buts de l'invention est de surmonter les déficiences de la technique antérieure telles qu'indiquées ci-dessus et en particulier de fournir des papiers améliorés contenant diverses quantités de latex et qui présentent des propriétés améliorées quel que soit le pH du latex utilisé et qui soient simples et peu coûteux à fabriquer.

En conséquence, un des buts de l'invention est de surmonter les déficiences de la technique antérieure telles qu'indiquées ci-dessus.

Un autre but est de fournir des papiers améliorés contenant diverses quantités de latex et qui présentent des propriétés améliorées, et qui soient simples et peu coûteux à fabriquer.

Un autre but est de fournir des procédés améliorés pour le fabricant de papiers contenant des latex.

La présente invention a donc pour but de fournir un nouveau procédé pour la fabrication continue de matières fibreuses contenant un latex, qui réponde mieux aux exigences de la pratique que les procédés antérieurement connus dans le même but, et plus particulièrement en ce qu'elle permet non seulement d'éviter toute une série d'opérations d'enduction en fabriquant le papier à partir de matières fibreuses contenant du latex dans leur masse, mais aussi en ce qu'on obtient un papier parfaitement homogène, c'est-à-dire un papier plus homogène et plus régulier qu'on ne l'obtenait par les procédés précédemment connus.

En théorie, il est connu que des particules ayant des charges électrostatiques opposées dans une solution aqueuse développent des forces d'attraction hydrodynamique appelées forces de Van der Waals, qui peuvent être contrôlées par une connaissance exacte du potentiel Zeta des diverses particules présentes dans la solution aqueuse. Il est ainsi possible, par exemple, de définir le potentiel Zeta d'une particule anionique dans l'eau et le potentiel Zeta d'une autre particule positive dans l'eau. En fonction de ces valeurs respectives des potentiels Zeta, il est possible de connaître la force et la rapidité de l'attraction de ces deux particules lorsqu'elles sont placées en présence l'une de l'autre dans le même mélange.

La présente invention repose sur la découverte de la manière de contrôler les forces de Van der Waals lorsqu'un latex anionique est mis en présence d'une suspension fibreuse anionique, dans laquelle les particules tendent à se repousser les unes les autres. A ce moment, pour fixer les particules de latex sur les fibres, il est nécessaire d'introduire un agent approprié de réticulation ou de pontage, c'est-à-dire un agent ayant une charge positive ou cationique, de sorte qu'il agisse comme un pont entre les fibres et les particules de latex. Lorsque cette interaction est établie, une fixation très fine et homogène des particules de latex sur la fibre est réalisée, pourvu cependant que l'agent de réticulation ait été introduit au bon moment et dans la bonne quantité. Une caractéristique fondamentale conforme à l'invention consiste dans la connaissance la régulation et le réglage du pH du bain contenant le mélange. La meilleure façon d'y parvenir est d'opérer au pH du latex considéré, ces latex étant disponibles dans le commerce à une valeur de pH donnée, précise, chimiquement stabilisée.

Suivant l'invention, le procédé pour la fabrication d'une feuille de papier contenant du latex, dans lequel on prépare une pâte à base de fibres et de particules de latex qui est ensuite transformée en feuille est caractérisé en ce que pour préparer la pâte on procède comme suit :

on met la matière fibreuse choisie en suspension dans l'eau,

on mesure le potentiel Zeta de cette suspension,

on ajuste le pH de cette suspension à une valeur voisine du pH de la suspension aqueuse de latex qui sera ajoutée ultérieurement,

on forme une solution aqueuse d'un agent de réticulation dont la charge électrique est de signe opposé à celui de la suspension de fibres,

on ajuste la concentration de cette solution d'agent de réticulation de façon telle qu'après ajout de cette solution et de la suspension de latex à la matière fibreuse, le potentiel Zeta du mélange obtenu soit pratiquement le même que celui de la suspension de matière fibreuse,

on règle le pH de cette solution d'agent de réticulation à une valeur voisine de celui de la suspension de fibres et de la suspension de latex,

on ajoute cette solution d'agent de réticulation à la suspension aqueuse de fibres,

on ajoute la suspension aqueuse de latex.

Le procédé conforme à l'invention évite la coagulation et la précipitation du latex de telle sorte que, tout d'abord, il ne se forme pas de dépôt de latex sur l'appareillage et ensuite que, dans le produit, les particules de latex existent à l'état finement particulaire sur les fibres, fixées sur celles-ci par l'agent de réticulation, de sorte que le papier obtenu soit hautement uniforme, homogène et poreux. Ayant cette dernière exigence présente à l'esprit, l'utilisation de nombreux additifs papetiers classiques tels que l'alun, qui tend à provoquer la précipitation ou la coagulation du latex, doit être évitée.

Le concept de s'opposer dans une large mesure ou au moins de minimiser la coagulation est très important dans la présente invention. Non seulement il conduit à un produit très supérieur comme il a été indiqué ci-dessus, mais encore il permet de remettre sous forme de pâte le papier préparé conformément

à l'invention, ou des déchets de celui-ci, sans difficulté, et il permet ainsi la réutilisation ou le recyclage des déchets, diminuant par là-même le coût des matières premières et réduisant la pollution. Dans le procédé papetier classique, environ 90 % ou davantage du latex sont coagulés. Conformément à la présente invention, la quantité de latex coagulé ne dépasse pas 20 %. De préférence, la coagulation du latex est évitée entièrement, ou elle est tolérée dans une proportion maximum d'environ 5 %. Comme résultat direct de l'empêchement de la coagulation du latex, la porosité du produit est augmentée et on utilise moins de latex. Lorsqu'il est déclaré ici qu'il ne se produit aucune coagulation notable du latex, ce que l'on veut dire est une coagulation normale ; d'autre part, il peut se faire que certaines particules individuelles de latex se combinent pour former des « particules un peu plus grandes », mais ces « particules plus grandes » restent néanmoins très petites et ne sont en aucune manière comparables aux particules classiquement coagulées dans lesquelles le latex s'amasse sous forme de perles.

La présente invention comporte un certain nombre d'avantages importants, dont certains ont été indiqués ci-dessus. Ces avantages comprennent :

1) L'utilisation d'un équipement de fabrication papetière classique, sans qu'il soit nécessaire d'investir des capitaux importants dans un appareillage nouveau.

2) La quantité de latex peut atteindre jusqu'à 75 % avantageusement jusqu'à 55 % des solides par rapport au produit fibreux sec.

3) La conservation du latex est totale, et il n'y a pas de particules perdues dans l'eau de drainage, ce qui réduit la pollution, économise les matières premières, et évite la pollution de l'équipement.

4) La vitesse du procédé papetier habituel n'est pas réduite, lorsqu'on utilise des fibres papetières dans la proportion de 700 à 25 CSF (Canadian Standard Freeness).

5) L'absence d'adhérence du latex en un point quelconque du circuit de trituration, du circuit de tête ou du circuit d'eau claire.

6) L'inutilité d'un nettoyage de l'équipement après fabrication, quelle que soit la proportion de latex utilisée.

7) L'absence de colmatage de la toile ou du feutre papetier.

8) L'absence d'accrochage ou d'adhérence de la feuille dans la section presse ou dans la section de séchage.

9) La réutilisation de déchets de matières premières, quelle que soit la proportion de latex utilisée.

10) Le procédé est applicable à tous les types de latex.

11) Le procédé permet aussi l'utilisation, seules ou en mélange, de résines phénoliques et amino résines en même temps que le latex.

12) Les produits ont des caractéristiques mécaniques remarquables.

13) La consommation de latex est réduite de manière importante, par rapport à celle des techniques de post-imprégnation.

14) Le coût de production est considérablement réduit, en prenant en considération non seulement ce qui a été indiqué ci-dessus, mais aussi le fait que le produit fini est terminé à l'extrémité de la machine à papier, et qu'il permet une augmentation considérable de la vitesse de drainage par comparaison avec les procédés classiques.

15) Le procédé est applicable à toutes les matières fibreuses utilisables en papeterie, parmi lesquelles les fibres du type végétal, animal, minéral ou synthétique, ou à n'importe quelle fibre recyclée, pour autant que le mélange soit chargé, très avantageusement avec une charge anionique.

Les facteurs suivants sont importants à considérer pour le succès du procédé et du produit selon l'invention.

a) Le latex reste pour une large part non coagulé, comme il a été indiqué ci-dessus.

b) Les particules fines de latex pour une large part non coagulées sont fixées aux fibres papetières d'une manière homogène, fournissant un produit papetier poreux doué de propriétés physiques remarquables. L'homogénéité du produit, révélée par le microscope électronique, de sorte qu'il est clair que les particules de polymère provenant du latex sont fixées aux fibres individuelles d'une manière uniforme et homogène sans être coagulées en particules notablement plus grandes, distingue le papier de tous les papiers de la technique antérieure.

c) L'agent de réticulation est choisi parmi des polyélectrolytes qui provoquent la liaison ou la fixation aux fibres des fines particules de latex sans entraîner une coagulation ou une précipitation notable du latex.

d) La quantité d'agent de réticulation polyélectrolyte est choisie de telle sorte que la quasi totalité des particules de latex soit attirée vers le polyélectrolyte qui est lié aux fibres. Pour obtenir les meilleurs résultats, le potentiel Zeta du mélange après addition de l'agent de réticulation et du latex est le même ou pratiquement le même que celui de la pâte de départ.

e) Le papier obtenu est fortement poreux, il se rapproche de la porosité du papier fabriqué sans latex, pour des proportions de latex allant jusqu'à 55 %.

f) Pour réaliser l'objectif désiré, le choix des concentrations (quantités), des séquences et d'autres paramètres tels que le pH est important, comme il ressort clairement de ce qui a été indiqué ci-dessus.

Ainsi, pour obtenir les meilleurs résultats, on choisit dans n'importe quelle circonstance particulière un latex qui soit stable pour un pH donné de la pâte à papier, ou bien on ajuste le pH de la pâte au pH stabilisé du latex utilisé.

L'importance du pH est démontrée par le fait que si le pH du mélange est différent du pH du latex, et que les deux soient mélangés entre eux, ceci entraînera inévitablement au moins une certaine coagulation du latex autour de la fibre, avec une réduction inévitable du contrôle du procédé et des propriétés avantageuses du produit.

En général, les catégories suivantes de papiers peuvent être fabriquées conformément à l'invention : papier de résistance élevée ou papier indéchirable, par exemple pour cartes, plans, règlements, affiches, couvertures de catalogues, livres d'enfants, sacs, livres techniques ; papiers pour la fabrication de cuir artificiel ou de produits de remplacement du cuir, tels que couvertures de livres, valises, sièges d'automobile et d'avion, couvertures plastifiées, ceintures, chaussures, bagages ; papiers synthétiques non tissés, par exemple pour bandages adhésifs, tentures, revêtements intérieurs, imperméables ; papiers pour adhésifs tels qu'adhésifs médicaux, rubans adhésifs, adhésifs industriels, adhésifs sanitaires à usage unique, étiquettes adhésives ; papiers imperméables, par exemple pour enveloppes imperméables ; papiers pour abrasifs tels que papiers de verre ; papiers pour revêtements muraux, par exemple les papiers tentures ; papiers pour revêtements de sols ; papiers-filtres, par exemple pour la filtration de l'eau, la filtration du café, la filtration de l'huile, la filtration automobile pour l'huile, l'air, l'essence et le carburant diesel, papiers pour filtres à gaz, papiers filtres à aspiration, sacs d'aspirateurs ; et papiers pour stratifiés décoratifs. Ces papiers ont d'excellentes caractéristiques mécaniques, en particulier en ce qui concerne le point de rupture, la résistance à la rupture en traction, la déformation thermique, ils ont une bonne résistance au milieu aqueux et une bonne résistance au dommage provoqué par des pliages répétés.

Pour une meilleure compréhension de l'invention, aussi bien dans sa nature que dans ses avantages, on se référera à présent à une série de modes de réalisation spécifiques, dont certains sont décrits ci-dessous en référence au dessin annexé dans lequel :

la figure 1 représente une vue schématique montrant le mécanisme de la réticulation d'une fibre anionique avec des particules de latex anioniques non coagulées, au moyen d'un agent de réticulation cationique intermédiaire ; et

la figure 2 est un schéma représentant la récupération de déchets ou de papiers usés conformément à l'invention.

Un aspect important de l'invention est l'utilisation d'eau pratiquement exempte d'ions aluminium, chlorure, sulfate et sulfamate en quantités plus grandes que des traces. Si ces ions sont présents dans le mélange aqueux de la pâte, il se produit une interférence et l'agent de réticulation n'est plus capable de remplir sa fonction. En pratique, on a trouvé que c'était de l'eau dure ne contenant pas les ions indiqués ci-dessus qui donnait les meilleurs résultats dans la présente invention.

Plus particulièrement, l'eau utilisée dans le procédé ne doit pas contenir plus d'environ 22 mg/l de chlore, plus d'environ 46 mg/l de sulfate, plus d'environ 0,2 mg/l de sulfamate et plus d'environ 0,2 mg/l d'aluminium.

De préférence l'agent de réticulation utilisé dans la présente invention est un condensat de cyanoguanidine et de formaldéhyde répondant à la formule :

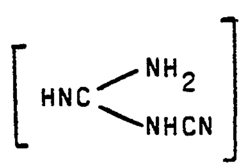

x, $[{}_yCH_2O]$

le rapport x/y étant compris entre 0,1 et 3, et de préférence entre 0,7 et 1,7, la masse moléculaire étant comprise entre 400 et 1 500, et de préférence entre 1 000 et 1 100.

Selon une caractéristique importante, le pH utilisé est le pH du latex stabilisé choisi. Ceci ouvre au procédé de larges possibilités en ce sens que l'on peut utiliser pratiquement n'importe quel latex anionique, mais ceci exige également un choix très soigneux de l'agent de réticulation cationique qui, conformément à l'invention, ne doit pas provoquer de coagulation notable du latex. En travaillant au pH auquel le latex est vendu à l'état stabilisé, on minimise les chances de coagulation. Par exemple, si le latex choisi a un pH stabilisé de 9, ce pH sera celui auquel la totalité du système sera ajustée. Le potentiel Zeta du latex et de la pâte initiale est mesuré, et l'agent de réticulation est ensuite choisi et utilisé en quantité telle que le potentiel Zeta du mélange final, après addition de l'agent de réticulation et du latex, soit pratiquement le même que celui de la pâte initiale.

Pour obtenir les meilleurs résultats, on effectue les opérations suivantes en tant qu'analyses initiales de routine :

1) On analyse chimiquement l'eau à utiliser dans le procédé papetier pour déterminer les anions et cations et la dureté, particulièrement en ce qui concerne les sels alcalino-terreux. Comme il a été indiqué

ci-dessus, l'eau doit être pratiquement exempte d'ions chlorure, aluminium, sulfate et sulfamate.

2) On choisit la matière fibreuse désirée pour obtenir le produit final.

3) On mesure le potentiel Zeta de cette matière fibreuse en suspension dans l'eau à la concentration papetière.

4) On choisit l'agent de réticulation cationique.

5) La quantité d'agent de réticulation cationique nécessaire est ensuite calculée en fonction du potentiel Zeta précédemment mesuré. Comme il a été indiqué ci-dessus, on préfère de beaucoup utiliser une quantité d'agent de réticulation telle qu'après addition du latex, le potentiel Zeta du mélange final soit alors pratiquement le même que celui de la suspension aqueuse de fibres initiale.

6) On choisit ensuite le latex d'élastomère, de polymère ou de copolymère, à fixer sur la matière fibreuse, en fonction du potentiel Zeta de la matière fibreuse et du potentiel Zeta du latex à sa concentration d'utilisation. Il est à noter que le processus peut être inversé, c'est-à-dire qu'il est possible par exemple de choisir d'abord le latex, puis de choisir la matière fibreuse et l'agent de réticulation en fonction du potentiel Zeta du latex. Cependant, conformément aux caractéristiques générales de l'invention, le latex est chargé anioniquement, c'est-à-dire que sa charge est la même que celle de la matière fibreuse.

7) On détermine le pH de la pâte aqueuse de fibres. On détermine le pH du latex, et sa concentration est ensuite ajustée en ajoutant de l'eau, de manière à atteindre 10 % environ de produits solides, sans modifier notablement le pH du latex, c'est-à-dire que son pH est maintenu à plus ou moins 0,2 près à sa valeur initiale stabilisée.

8) On ajuste ensuite individuellement le pH de la pâte fibreuse et le pH de l'agent de réticulation cationique à une valeur égale à plus ou moins 0,1 près au pH du latex.

9) On effectue alors un essai de laboratoire sur le temps de fixation, c'est-à-dire sur le temps nécessaire pour achever la fixation du polymère à la matière fibreuse en utilisant l'agent de réticulation cationique.

Il est à noter que ce procédé général de l'invention permet de fixer des latex très divers sur la matière fibreuse, quel que soit le pH, c'est-à-dire que le produit papetier peut être fabriqué en fixant un latex ayant un pH quelconque compris entre 1 et 14. (En plus des latex mentionnés ci-dessus, on a utilisé conformément à l'invention, un latex styrène/acrylique de Rohm & Haas E 941, et un latex styrène butadiène carboxylé Dow 685, stabilisés à un pH compris entre 5,0 et 6,5 et ayant une taille de particules de 140-160 nm).

Ainsi, ce procédé s'applique à l'utilisation de n'importe quel latex anionique acide, neutre ou alcalin stabilisé en milieu aqueux.

A la fin du procédé décrit ci-dessus, le mélange est prêt à être transformé en feuille de papier, par exemple sur une machine à papier classique ou en une plaque plane ou moulée, etc. Par conséquent, il est absolument nécessaire de voir que les conditions de pH en particulier ne subissent aucun changement, c'est-à-dire que le produit doit être transformé et séché sans modification du pH, et que toute dilution qui doit être faite en ce qui concerne le mélange doit l'être avec un milieu aqueux tel que de l'acide acétique préajusté au pH du mélange ainsi produit. Soit dit en passant, ce dernier point contraste fortement avec les procédés classiques de fabrication de papier contenant du latex, dans lesquels le pH n'est pas contrôlé de façon aussi soigneuse, et dans lesquels les diverses matières introduites, telles que l'alun et les adjuvants de conservation, sont souvent ajoutés aussitôt avant la formation du produit.

La détermination du potentiel Zeta de tous les agents libres présents permet de régler les forces de Van der Waals qui s'établissent entre les diverses particules, et de savoir avec précision la force et la rapidité de l'attraction des diverses particules présentes dans la solution aqueuse. En d'autres termes, la détermination du potentiel Zeta de toutes les matières présentes (fibres, latex et agent de réticulation) leur permet de se fixer pour obtenir un revêtement contrôlé très fin et homogène, de particules de plastomère ou d'élastomère sur la fibre. L'ajustement et le réglage du pH du milieu réactif sont donc d'une importance primordiale. S'il se produit une variation du pH ou si le pH du milieu réactif diffère de celui du latex, il en résulte inévitablement une coagulation indésirable du latex.

La feuille ou la plaque humide quittant la machine à façonner est parfaitement recyclable sans aucune difficulté, car le latex n'a pas été coagulé. Tout déchet ou fragment obtenu au cours de la fabrication industrielle peut être récupéré de manière simple et facile, comme matière première de la préparation de nouveau produit. Il a déjà été remarqué ci-dessus que les forces de Van der Waals peuvent être rompues par l'utilisation d'ions chlorure, sulfate, sulfamate ou aluminium.

La figure 1 illustre le procédé conforme à l'invention. Sur la figure, on réunit une fibre chargée négativement 30 et un agent de réticulation chargé positivement 32. Lorsque le latex est ajouté à la suspension aqueuse de fibres, les particules fines individuelles de latex 34, à l'état non coagulé, sont attirées par l'agent de réticulation 32 et s'unissent à lui.

Il s'ensuit également que les papiers fabriqués conformément à la présente invention peuvent être réutilisés, récupérés, ou recyclés, contrairement au papier contenant du latex préparé conformément à la technique antérieure. Cette possibilité de remise en pâte et de recyclage est aisément mise en pratique dans un milieu aqueux, à l'état froid, ou dans certains cas, en chauffant le milieu aqueux, en présence d'un agent mouillant et d'une faible quantité, par exemple de 0,01 à 0,15 % par rapport au volume d'eau et

de 0,2 à 1,5 % par rapport au poids de matière fibreuse sèche, d'ions chlorure et/ou d'ions aluminium et/ou d'ions sulfate et/ou d'ions sulfamate. C'est évidemment la taille extrêmement fine des particules de polymère du latex déposées sur les fibres qui explique la remise en pâte facile des papiers fabriqués conformément à la présente invention.

Evidemment, avant la réutilisation, le milieu aqueux doit être traité de façon à éliminer les ions chlorure, sulfate ou sulfamate ou la suspension contenant ces ions doit être diluée, par exemple à environ 22 mg d'ions chlorure par litre d'eau au maximum. La liaison au moyen d'un agent de réticulation ne s'effectuera pas dans le milieu aqueux si le milieu aqueux contient plus d'environ 22 mg/litre de chlorure, d'environ 46 mg/litre de sulfate, d'environ 0,2 mg/litre de sulfamate et d'environ 0,2 mg/litre d'aluminium. Evidemment, même avec des teneurs en ces ions plus élevées, la pâte peut être réutilisée dans la papeterie classique.

Normalement, les ions ci-dessus ne sont nécessaires pour l'opération de recyclage que lorsque la teneur en latex du produit dépasse 40-45 % en poids de polymère sec par rapport au poids total du produit sec. Sinon, il suffit de soumettre les déchets ou fragments à un raffinage classique pour séparer les unes des autres les fibres liées par du latex homogène. Pour les raisons ci-dessus, pour ajuster le pH, dans la mise en œuvre du procédé selon l'invention, il est nécessaire d'utiliser un acide ne contenant pas les ions ci-dessus, tel que l'acide acétique.

La figure 2 représente l'installation nécessaire pour recycler les papiers à base de latex préparés conformément à la présente invention. Le papier à recycler est introduit dans un réservoir 101 contenant de l'eau et les ions ci-dessus et comprenant un agitateur 102. L'agitation réduit le papier en fragments. Dans le réservoir, il reste quelques agglomérats très fins tels que des pastilles, et par conséquent le mélange est introduit dans un appareil de fragmentation 103 dit « réducteur de pastilles » qui recycle une partie du mélange à travers la canalisation 105 dans le réservoir 101. La matière fibreuse réutilisable est collectée dans la canalisation 104.

En ce qui concerne les proportions de matière, il a été remarqué ci-dessus que pour avoir les meilleurs résultats, les quantités relatives du latex et de l'agent de réticulation choisi sont basées non pas sur leur poids propre, mais sur leurs potentiels Zeta relatifs de façon à réaliser un mélange aussitôt avant la formation du produit qui a un potentiel Zeta pratiquement égal au potentiel Zeta de la pâte initiale. Par ailleurs, ce résultat peut être obtenu en utilisant diverses quantités de latex par rapport à la quantité de matières fibreuses de départ, étant entendu que moins on utilise de latex par rapport à la matière fibreuse, et plus le produit se rapprochera des propriétés d'un papier classique. Ainsi, la quantité de latex par rapport à la quantité de matières fibreuses dépendra essentiellement de l'application prévue pour le produit, et ceci sera discuté plus en détail ci-après. En général, cependant, la quantité de latex utilisée, conformément au procédé général décrit ci-dessus, variera entre 3 et 75 % (produit sec), de préférence entre 10 et 55 %, par rapport au poids sec total de la matière fibreuse ; et la quantité d'agent de réticulation cationique sera équilibrée par rapport à la quantité de latex utilisée comme il a été indiqué ci-dessus. Etant donné que la nature du latex lui-même, c'est-à-dire le fait qu'il s'agit d'un polymère plus ou moins dur ou tendre, affectera les propriétés du produit, la quantité de latex utilisée les affectera également.

Lorsque le produit a été formé et que l'eau en a été filtrée, il peut être souhaitable, et même nécessaire dans certaines applications particulières, d'effectuer un ou plusieurs traitements de surface, après le premier circuit de séchage. Ces divers traitements peuvent être effectués conformément à des techniques connues. Suivant la nature du traitement de surface, il peut être nécessaire de fixer thermiquement la matière ajoutée au cours du traitement de surface, par exemple dans une opération complémentaire de séchage. A ce moment, si le produit est une nappe fine, il est alors enroulé et il est prêt, soit pour la distribution commerciale soit pour un traitement ultérieur, selon l'application finale désirée.

Parmi les traitements de surface qui peuvent être utilisés, on citera diverses opérations de conditionnement, parmi lesquelles l'application d'amidons solubilisés ou insolubilisés, de carboxyméthylcelluloses solubilisées ou insolubilisées, de suspensions acryliques, d'alcools de polyvinyle solubilisés ou insolubilisés, de couches barrières pour des solvants organiques, d'agents de conditionnement naturels ou synthétiques, d'agents de cohésion, etc.

Comme exemple de traitement spécial, on peut citer des traitements d'application d'une couche adhésive sur ce papier. Ainsi, des papiers adhésifs à usage médical, industriel et technique, sont actuellement fabriqués conformément à la technique antérieure à partir d'un papier ayant un grammage de 50 à 160 g/m$^2$. Ce substrat de papier est imprégné d'un polymère ou d'un copolymère ou d'un mélange de polymères, par exemple de polymères du styrène, en une ou plusieurs passes. Lorsque cette opération est terminée, le papier imprégné subit alors deux opérations effectuées en milieu solvant, c'est-à-dire (1) le dépôt sur une face du substrat de papier d'une couche anti-adhésive permettant l'enroulement ultérieur du papier sur une bobine, et l'enroulement du produit fini pour l'utilisation, suivi par (2) le dépôt sur l'autre face du substrat de papier, dans une autre machine, d'une couche adhésive.

Différents modes d'emploi du procédé selon la présente invention seront compris plus aisément à l'aide des exemples spécifiques suivants. On doit noter néanmoins qu'ils ne sont donnés qu'à titre d'illustration et ne constituent en aucune manière des limitations de l'invention.

Exemple 1A

On met en suspension 1 200 kg d'une cellulose constituée de 980 kg de fibres de cellulose de résineux blanchie à la soude et 220 kg de fibres de cellulose de feuillus blanchie à la soude, dans 30 mètres cubes d'eau à un pH de 7,3, obtenant ainsi une concentration de 4 %. Le potentiel Zeta du mélange est de — 7,8 (mV). Cette mesure est effectuée au moyen d'un Zetamètre du type « Laser Zee Model 500 » vendu par Pen Kem N.Y. Le pH de la suspension fibreuse est ajusté à 4,8, valeur du pH du latex choisi, par addition d'acide acétique. Une solution de l'agent de réticulation choisi, constituée d'un condensat de cyanoguanidine et de formaldéhyde, est ajustée à 3 % de matières solides et à un pH de 4,8 ; son potentiel Zeta est de + 13,7. On ajoute alors à la pâte 14,5 litres de cette solution à 3 % de l'agent de réticulation.

Puis, on ajoute à la pâte 240 kg du latex choisi, constitué d'acrylonitrile additionné d'acrylate d'éthyle (« Rhoplex p-339 ») ajusté à une teneur en matières solides de 10 % au moyen d'eau à un pH de 4,8, le latex ayant un potentiel Zeta de — 6,8. Comme la quantité d'agent de réticulation initialement ajoutée est plutôt faible, on ajoute alors une quantité supplémentaire de 2,5 litres de la même solution. Le potentiel Zeta du mélange est alors de — 7,8, valeur identique au potentiel Zeta de la pâte de départ. Ce mélange, après dilution à une consistance papetière appropriée au moyen d'eau à un pH de 4,8, est prêt pour la formation de papier.

Exemple 1B

On répète l'exemple 1A, excepté que dans la première addition d'agent de réticulation, on ajoute 17 litres de la solution à 3 %. Aucune addition secondaire de l'agent de réticulation n'est alors nécessaire.

Exemple 2

On met en suspension dans 30 mètres cubes d'eau, 840 kg de carbonate de calcium ayant un potentiel Zeta de — 7,2 et 340 kg de fibres de cellulose de résineux blanchie à la soude ayant un potentiel Zeta de — 16,1. Le potentiel Zeta de la suspension obtenue est de — 7,3. Le pH de la suspension est ajusté à 7,5 par addition d'hydroxyde de sodium, ce pH étant celui du latex de polymère choisi. On ajoute ensuite 21,5 litres d'une solution de l'agent de réticulation utilisé dans l'exemple 1A (on peut aussi, comme le pH est proche de la neutralité, ajouter comme agent de réticulation du « Nadavine LT », polyélectrolyte cationique de Bayer comprenant une solution aqueuse de résine polyamide/polyamine epichlorhydrine, ayant une densité de 1,06 g/cm$^3$ à 20 °C).

Puis, après avoir attendu quelques minutes, on ajoute ensuite 360 kg d'un latex syrène/butadiène stabilisé à un pH de 7,5. Le latex est ajouté sous la forme d'une solution aqueuse à 10 % dont le potentiel Zeta est de — 11,3. Ensuite, on ajoute 3,5 litres supplémentaires de l'agent de réticulation et le potentiel Zeta du mélange final est d'environ — 7,3, le même que celui de la suspension de départ.

Le mélange est alors utilisé pour fabriquer un papier, dont la teneur en latex est d'environ 23 %. Les propriétés du papier sont excellentes, et on constate qu'il a une régularité et une porosité élevées.

Exemple 3

Dans 30 mètres cubes d'eau, on introduit 1 200 kg de fibres de cellulose constituées de 980 kg de fibres de cellulose de résineux blanchie à la soude et de 220 kg de fibres de cellulose de feuillus blanchie à la soude, pour produire une concentration de 4 % à un pH de 7,3 dont le potentiel Zeta est de — 7,8. On abaisse le pH de la suspension fibreuse à 4,8 avec de l'acide acétique de sorte que la bouillie ait le même pH que le latex que l'on ajoutera par la suite. Puis, on ajoute un agent de réticulation constitué d'un condensat formaldéhyde/cyanoguanidine ayant la formule indiquée ci-dessus, à un pH de 4,7, à raison de 7 % de matières solides par rapport au poids sec du polymère présent dans le latex que l'on ajoutera par la suite ; comme l'agent de réticulation est dilué à 3 % avec de l'eau, on en ajoute par conséquent 17 litres, le potentiel Zeta de la solution d'agent de réticulation étant de + 13,7.

Ensuite, on ajoute le latex (« Rhoplex P-339 ») à raison de 20 % par rapport au poids sec des fibres, ou 240 kg dilués à 10 % avec de l'eau, ayant un pH de 4,8, le potentiel Zeta du latex étant de — 6,8. Le potentiel Zeta du mélange obtenu est de — 7,8.

Ce mélange est utilisé pour fabriquer un papier qui est ensuite conditionné dans une presse d'encollage avec une composition d'alcool de polyvinyle hydrolysé (PVA-117 h de Kuraray Co., Ltd ; 10 % de matières solides, potentiel Zeta + 7,4) ; d'un complexe au chrome (« Quilon » de Dupont ; 5 % de matières solides, potentiel Zeta + 28,5) ; et de kaolin (5 % de matières solides, potentiel Zeta de — 12,1), le mélange total ayant un potentiel Zeta de + 12,2. Comme le mélange a un potentiel Zeta positif, il adhère très bien au support de papier qui a un potentiel Zeta négatif.

Exemple 4

Dans 30 mètres cubes d'eau, on introduit 1 200 kg de fibres de cellulose (770 kg de fibres de

cellulose de résineux blanchie à la soude et 430 kg de cellulose de feuillus blanchie à la soude) pour produire une concentration de 4 % à un pH de 7,3, dont le potentiel Zeta est de — 7,8. On ajuste le pH à 4,8 avec de l'acide acétique. Puis on ajoute le même agent de réticulation que dans l'exemple 3, à raison de 3,5 litres (soit 6 % de matières solides par rapport à la quantité de polymère solide dans le latex à ajouter).

Puis on ajoute le même latex que dans l'exemple 3, à raison de 5 % par rapport au poids sec des fibres (60 kg dilués à 10 % avec de l'eau à un pH de 4,8), dont le potentiel Zeta est de — 6,8. Comme la quantité d'agent de réticulation initialement ajoutée est plutôt faible, on ajoute ensuite un supplément de 0,6 litre de l'agent de réticulation, dilué à 3 % avec de l'eau (1 % de matières solides par rapport au poids sec du polymère présent dans le latex).

Le mélange obtenu ayant un potentiel Zeta de — 7,8 est ensuite utilisé pour fabriquer du papier, ce papier étant ensuite revêtu dans la presse d'encollage d'une solution aqueuse de résine acrylique (à 2,5 % de matières solides) ayant un potentiel Zeta de + 21,3.

## Exemple 5

Dans 30 mètres cubes d'eau, on introduit 1 200 kg d'une matière fibreuse constituée de 720 kg de fibres de cellulose de résineux blanchie à la soude ayant un potentiel Zeta de — 16,1 et 480 kg de fibres de viscose synthétique ayant un potentiel Zeta de — 3,4. La suspension a une concentration en fibres de 4 %, un pH de 7,3 et un potentiel Zeta de — 5,7. Son pH est alors ajusté à 4,8 avec de l'acide acétique. On suit le mode opératoire de l'exemple 3 en utilisant le même agent de réticulation (7 % par rapport au poids de matières solides présentes dans le latex) après quoi on ajoute le latex, dans ce cas 10 % en poids de matières solides par rapport au poids sec des fibres (120 kg dilués à 10 % avec de l'eau). Le potentiel Zeta du mélange final est de — 5,7. On fabrique à partir de ce mélange un papier que l'on revêt ensuite dans la presse d'encollage d'une solution à 5 % de Quilon ayant un potentiel Zeta de + 28,5.

## Exemple 6

Dans 30 mètres cubes d'eau, on introduit 1 200 kg de cellulose comprenant 1 080 kg de fibres de cellulose de résineux non blanchie à la soude, et 120 kg de fibres de cellulose de feuillus non blanchie à la soude. La suspension obtenue a une concentration de 4 %, un pH de 7,3 et un potentiel Zeta de — 10,3. On ajuste son pH à 4,8 avec de l'acide acétique. Comme dans l'exemple 3, on ajoute 7 % en poids d'agent de réticulation à base de condensat cyanoguanidine formaldéhyde par rapport au poids sec du latex (25 litres dilués à 3 % avec de l'eau). Puis on ajoute le latex (« Rhoplex P-339 ») à raison de 30 % en poids de matières solides par rapport au poids sec des fibres. Le potentiel Zeta du mélange final est de — 10,3. On revêt le papier formé à partir de ce mélange, dans une presse d'encollage, avec un mélange de Quilon (à 7 % en poids de solides) et d'alcool de polyvinyle hydrolysé (à 7 % en poids de matières solides).

## Exemple 7

Dans 30 mètres cubes d'eau, on introduit 1 200 kg de fibres de cellulose de résineux blanchie à la soude pour produire une concentration de 4 % ayant un pH de 7,3 et un potentiel Zeta de — 16,1. On ajuste le pH de la suspension à 4,8 avec de l'acide acétique. Puis, on ajoute un agent de réticulation (polyamine de masse moléculaire élevée) ayant un pH de 13 dans une proportion (de matières solides) de 3,6 % par rapport au poids sec du polymère présent dans le latex (13,8 litres d'une solution à 1 % à un pH de 7,3). Puis on ajuste à nouveau le pH de la suspension à 4,8 avec de l'acide acétique et la suspension a alors un potentiel Zeta d'environ + 7,6. On ajoute ensuite le latex (« Rhoplex P-339 ») (à 32 % de matières solides par rapport au poids sec des fibres, ou 384 kg dilués à 10 % avec de l'eau à un pH de 4,8, et un potentiel Zeta de — 6,8). Le potentiel Zeta du mélange est de — 16.

Le papier formé à partir de ce mélange est ensuite revêtu dans la presse d'encollage d'un mélange d'amidon (à 5 % en poids de matières solides), de kaolin (22,5 % en poids de matières solides), d'oxyde de titane rutile (2,5 % en poids de matières solides), d'une solution aqueuse acrylique (à 5 % en poids de matières solides), de résine urée-formaldéhyde (à 0,3 % en poids de matières solides) et de stéarate de calcium précipité (à 0,5 % en poids de matières solides).

## Exemple 8

Dans 30 mètres cubes d'eau, on introduit 1 200 kg d'une matière fibreuse constituée de 900 kg de fibres de bananiers (potentiel Zeta — 7,8), 180 kg de fibres de nylon synthétique (potentiel Zeta — 0,1) et 120 kg de fibres de déchets de cuir naturel (potentiel Zeta + 6,6) pour produire une concentration de 4 % ayant un pH de 7,3 et un potentiel Zeta de — 7,3. On ajuste le pH à 4,8 avec de l'acide acétique. L'agent de réticulation à un pH de 4,7 (condensat cyanoguanidine/formaldéhyde) est ajouté dans une proportion de 8 % en poids par rapport au poids sec du latex à ajouter. Puis on ajoute du « Rhoplex P-339 » pour avoir 35 % en poids de particules de polymère par rapport au poids sec du mélange fibreux (220 kg dilués à 10 % avec de l'eau à un pH de 4,8). Puis on ajoute 2 % supplémentaires de l'agent de réticulation. Le potentiel Zeta du mélange est de — 7,2.

Le papier fabriqué à partir de ce mélange est revêtu d'un liquide contenant 2 % en poids de matières solides d'alcool de polyvinyle hydrolysé et 8 % en poids de matières solides de « Quilon ».

Exemple 9

On fabrique un papier comme il a été décrit à l'exemple 6. On le revêt dans la presse d'encollage d'une solution de Quilon (5 % en poids de matières solides).

Exemple 10

On fabrique un papier comme il a été décrit à l'exemple 3. On revêt ce papier dans la presse d'encollage d'une solution de polymère anionique (à 20 % en poids de matières solides) ayant un potentiel Zeta de — 14,7.

Exemple 11

Dans 30 mètres cubes d'eau, on introduit 840 kg de carbonate de calcium ayant un potentiel Zeta de — 7,2 et 360 kg de fibres de cellulose de résineux blanchie à la soude ayant un potentiel Zeta de — 16,1, pour produire une suspension ayant une concentration de 4 %, un pH de 7,3 et un potentiel Zeta de — 7,3. On ajuste le pH de la suspension à 7,5 (pH du latex qui sera ajouté), avec de l'hydroxyde de sodium. Puis on ajoute l'agent de réticulation (pH 4,7) (à 6 % par rapport au poids sec du polymère à ajouter, c'est-à-dire 21,5 litres dilués à 3 % avec de l'eau, à un pH de 7,3, après avoir ajusté le pH à 7,5 avec de l'hydroxyde de sodium dilué) ; l'agent de réticulation utilisé est le condensat cyanoguanidine/formaldéhyde à un potentiel Zeta de + 13,7.

Puis, on ajoute le latex de polymère, un latex styrène-acrylique, dans une proportion de 31 % en poids de matières solides par rapport au poids sec de la matière fibreuse (360 kg dilués à 10 % avec de l'eau à un pH de 7,5 ; un potentiel Zeta de — 11,3). Puis on ajoute une quantité supplémentaire de l'agent de réticulation (1 % par rapport au poids sec du polymère présent dans le latex, ou 3,5 litres dilués à 3 % avec de l'eau à un pH de 7,3 pour amener le pH à 7,5, avec de l'hydroxyde de sodium dilué). Le potentiel Zeta du mélange est de — 7,3.

Un autre latex styrène-butadiène qui peut être avantageusement utilisé est le Dow 685, qui est un latex styrène/butadiène carboxylé stabilisé à un pH compris entre 5,0 et 6,5, vendu dilué dans l'eau à une concentration de 47 %, la taille des particules étant de 140 à 160 nm. Lorsqu'on utilise le Dow 685, on effectue les ajustements appropriés au procédé de l'exemple 11 pour adapter le procédé au pH stabilisé du latex.

Exemple 12

Dans 30 mètres cubes d'eau, on introduit 1 200 kg de fibres de cellulose de résineux blanchie à la soude, pour produire une suspension d'une concentration de 4 % ayant un pH de 7,3 et un potentiel Zeta de — 16,1. On ajuste le pH à 4,8 avec de l'acide acétique. On ajoute à la suspension fibreuse un agent de réticulation à base de polyamine de masse moléculaire élevée (pH initial 13) dilué avec de l'eau et on ajuste son pH avec de l'acide acétique pour obtenir un pH de 4,8, à 3 % de matières solides (7,2 litres) par rapport au poids sec du latex à utiliser et avec un potentiel Zeta de + 7,6. Puis on ajoute le latex (20 % en poids de matières solides par rapport au poids sec des fibres ; 240 kg dilués à 10 % avec de l'eau à un pH de 4,8) ayant un potentiel Zeta de — 6,8. Puis on ajoute une quantité supplémentaire d'agent de réticulation (2,5 litres de la solution précédemment décrite). Enfin, on ajoute une résine phénolique non polymérisable (à 6 % de matières solides par rapport au poids sec des fibres). Le potentiel du mélange final est de — 16,0.

Exemple 13

On reproduit l'exemple 12, mais en utilisant une quantité plus importante d'agent de réticulation et de latex. Dans ce cas, on ajoute d'abord 3 % d'agent de réticulation (11,5 litres) puis 32 % de matières solides de latex par rapport au poids sec des fibres (384 kg dilués à 10 % avec de l'eau). On ajoute enfin 0,6 % d'agent de réticulation supplémentaire (2,3 litres dilués à 1 %). Le potentiel Zeta de la suspension finale est de — 16.

Exemples comparatifs

Le tableau suivant compare les quantités de polymère ou d'élastomère utilisées conformément à la présente invention pour produire un type particulier de papier, avec les quantités de polymère ou d'élastomère nécessaires dans la technique antérieure d'imprégnation pour produire la même sorte de papier.

Tableau

Comparaison des pourcentages de polymères utilisés dans diverses technologies, pour les mêmes niveaux de qualité et le même produit fini

| UTILISATION FINALE | Poids de l'élastomère déposé sur le papier vierge (imprégnation) | Poids de l'élastomère fixé sur les fibres (invention) |
|---|---|---|
| Papier de haute résistance | 40 à 60 % | 20 à 25 % |
| Support pour substitut du cuir | 30 à 50 % | 20 à 30 % |
| Non tissés synthétiques | 25 à 50 % | 18 à 22 % |
| Papiers pour adhésifs | 70 à 100 % | 25 à 35 % |
| Papiers pour abrasifs | 70 à 100 % | 30 à 35 % |
| Papiers tentures | 25 à 40 % | 8 à 15 % |
| Revêtements de sols | 40 à 60 % | 20 à 30 % |
| Papiers filtres | 10 à 80 % | 5 à 20 % |
| Papiers pour stratifiés décoratifs | 100 à 300 % | 30 à 100% (attendus) |

Pourcentages exprimés par rapport au poids sec de la matière fibreuse ou du papier :

$$\frac{\text{poids sec élastomère}}{\text{poids sec matière fibreuse}}$$

La technique utilisant la précipitation-coagulation dans la masse, bien que manifestement plus économique a de nombreux inconvénients qui résultent de la nécessité d'apporter des modifications considérables à la machine à carton avant de l'utiliser, de l'absence de contrôle efficace de la réaction de coagulation-précipitation sur la matière fibreuse et minérale, et d'un taux extrêmement élevé de colmatage et de pollution, ainsi que d'un manque de fiabilité et de régularité non seulement dans le procédé, mais également dans la qualité de la matière fabriquée.

Le procédé réalisé conformément à la présente invention élimine les divers inconvénients de la technique antérieure. Par comparaison avec la technique d'imprégnation, les matières fabriquées conformément à l'invention permettent une économie de matière, car il ne faut que 20 à 30 % (en poids sec) d'élastomère par rapport au poids du produit sec final, contre 40-60 % dans la technique d'imprégnation. De plus, la fixation dans le milieu aqueux réalisée conformément à l'invention évite un stade de transformation ultérieur, car dans le produit venant directement de la machine à carton l'élastomère est fixé sur les fibres d'une manière parfaitement homogène.

Par comparaison avec la technique de précipitation-coagulation, les matières fabriquées conformément à l'invention apportent de la fiabilité, de la régularité et de l'homogénéité au procédé de fabrication et à la qualité de la matière produite, à un degré qui ne peut être égalé dans le procédé de précipitation-coagulation. Conformément à la technique de l'invention, dans laquelle le pH et le potentiel Zeta sont contrôlés de telle sorte que la quantité précise d'agent de réticulation nécessaire pour lier toutes les particules de latex aux fibres soit utilisée sans provoquer de coagulation ou de précipitation du latex, la fixation du polymère, du copolymère ou de l'élastomère est totale, et une absence absolue de pollution des effluents est ainsi garantie, ainsi qu'une reproductibilité parfaite et constante sur une machine à carton ordinaire, qui n'a subi aucune modification dans sa structure ou ses circuits.

A titre d'exemple, on fabrique conformément à l'invention un support de carton convenant pour l'utilisation dans la fabrication de revêtements de sol, par l'application sur celui-ci d'une résine vinylique ou d'un autre polymère, suivant la nature précise du produit final. Ce matériau de support contient 19,5 % de fibres de résine, 62 % de particules minérales (carbonates), 18,4 % d'élastomère (appliqué sous la forme d'un latex) et 0,6 % d'agent de réticulation.

Il est précisé que l'invention n'est pas limitée aux exemples cités qui sont donnés à titre d'illustration et que des modifications peuvent être introduites sans qu'on sorte du cadre de l'invention.

**Revendications**

1. Procédé pour la fabrication d'une feuille de papier contenant du latex, dans lequel on prépare une pâte à base de fibres et de particules de latex qui est ensuite transformée en feuille, cette pâte étant préparée comme suit :

on met la matière fibreuse choisie en suspension dans l'eau,

on mesure le potentiel Zeta de cette suspension,

on ajuste le pH de cette suspension à une valeur voisine du pH de la suspension aqueuse de latex qui sera ajoutée ultérieurement,

on forme une solution aqueuse d'un agent de réticulation dont la charge électrique est de signe opposé à celui de la suspension de fibres,

on ajuste la concentration de cette solution d'agent de réticulation de façon telle qu'après ajout de cette solution et de la suspension de latex à la matière fibreuse, le potentiel Zeta du mélange obtenu soit pratiquement le même que celui de la suspension de matière fibreuse,

on règle le pH de cette solution d'agent de réticulation à une valeur voisine de celui de la suspension de fibres et de la suspension de latex,

on ajoute cette solution d'agent de réticulation à la suspension aqueuse de fibres,

on ajoute la suspension aqueuse de latex.

2. Procédé selon la revendication 1, dans lequel l'eau utilisée dans le procédé ne contient pas plus d'environ 22 mg/litre de chlore, pas plus d'environ 46 mg/litre de sulfate, pas plus d'environ 0,2 mg/litre de sulfamate et pas plus d'environ 0,2 mg/litre d'aluminium.

3. Procédé selon la revendication 1, dans lequel l'acide utilisé pour ajuster le pH ne contient pas d'ions chlorure, aluminium, sulfate et sulfamate.

4. Procédé selon l'une quelconque des revendications 1 à 3, dans lequel l'agent de réticulation est un condensat de cyanoguanidine et de formaldéhyde répondant à la formule :

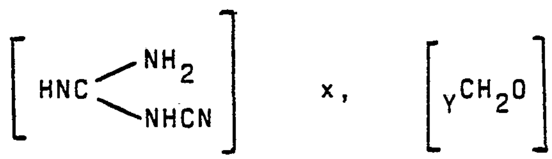

le rapport x/y étant compris entre 0,1 et 3 et de préférence entre 0,7 et 1,7, la masse moléculaire étant comprise entre 400 et 1 500 et de préférence entre 1 000 et 1 100.

**Claims**

1. A method of manufacturing a sheet of paper containing latex, in which a pulp is prepared from fibres and latex particles and subsequently converted into a sheet, the pulp being prepared as follows :

the chosen fibrous material is suspended in water,

the Zeta potential of the suspension is measured,

the pH of the suspension is adjusted to a value near the pH of the aqueous latex suspension to be added subsequently,

an aqueous solution is formed from a cross-linking agent having an electric charge of opposite polarity to that of the suspension of fibres,

the concentration of the solution of cross-linking agent is adjusted so that after the aforementioned solution and the latex suspension have been added to the fibrous material, the Zeta potential of the resulting mixture is practically the same as that of the suspension of fibrous material,

the pH of the cross-linking agent solution is adjusted to a value near that of the suspension of fibres and the latex suspension,

the solution of cross-linking agent is added to the aqueous suspension of fibres, and

the aqueous suspension of latex is added.

2. A method according to claim 1, in which the water used in the method does not contain more than about 22 mg/litre of chlorine, not more than about 46 mg/litre of sulphate, not more than about 0.2 mg/litre of sulphamate and not more than about 0.2 mg/litre of aluminium.

3. A method according to claim 1, in which the acid used for adjusting the pH does not contain chloride or aluminium or sulphate or sulphamate ions.

4. A method according to any of claims 1 to 3, in which the cross-linking agent is a condensate of cyanoguanidine and formaldehyde having the following formula :

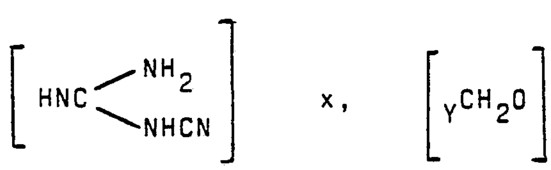

the ratio x/y being between 0.1 and 3 and preferably between 0.7 and 1.7 and the molecular weight being between 400 and 1 500 and preferably between 1 000 and 1 100.

**Patentansprüche**

1. Verfahren zur Herstellung einer latexhältigen Papierbahn, bei welchem man einen Brei auf Basis von Fasern und Latexteilchen herstellt, der sodann zu einer Bahn verarbeitet wird, wobei dieser Brei wie folgt hergestellt wird :

man suspendiert das ausgewählte Fasermaterial in Wasser,

man mißt das Zetapotential dieser Suspension,

man stellt den pH-Wert dieser Suspension auf einen Wert nahe dem pH-Wert der später zuzusetzenden wässrigen Latexsuspension ein,

man bildet eine wässrige Lösung eines Vernetzungsmittels, deren elektrische Ladung ein gegenüber jenem der Ladung der Fasersuspension entgegengesetztes Vorzeichen hat,

man stellt die Konzentration dieser Vernetzungsmittellösung so ein, daß nach der Zugabe dieser Lösung und der Latexsuspension zum Fasermaterial das Zetapotential des erhaltenen Gemisches praktisch das gleiche ist wie jenes der Fasermaterialsuspension,

man stellt den pH-Wert dieser Vernetzungsmittellösung auf einen Wert nahe jenem der Fasersuspension und der Latexsuspension ein,

man setzt diese Vernetzungsmittellösung der wässrigen Fasersuspension zu,

man setzt die wässrige Latexsuspension zu.

2. Verfahren nach Anspruch 1, bei welchem das im Verfahren verwendete Wasser nicht mehr als ungefähr 22 mg/l Chlor, nicht mehr als ungefähr 46 mg/l Sulfat, nicht mehr als ungefähr 0,2 mg/l Sulfamat und nicht mehr als ungefähr 0,2 mg/l Aluminium enthält.

3. Verfahren nach Anspruch 1, bei welchem die zur Einstellung des pH-Wertes benutzte Säure keine Chlorid-, Aluminium-, Sulfat- und Sulfamationen enthält.

4. Verfahren nach einem der Ansprüche 1 bis 3, bei welchem das Vernetzungsmittel ein Kondensat von Cyanoguanidin und Formaldehyd entsprechend der Formel :

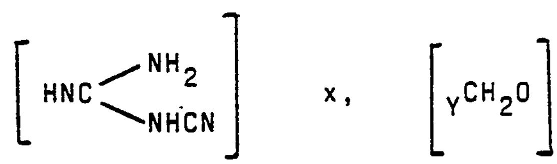

ist, wobei das Verhältnis x/y zwischen 0,1 und 3, vorzugsweise zwischen 0,7 und 1,7 und die Molekularmasse zwischen 400 und 1 500, vorzugsweise zwischen 1 000 und 1 100, liegt.

FIG_1

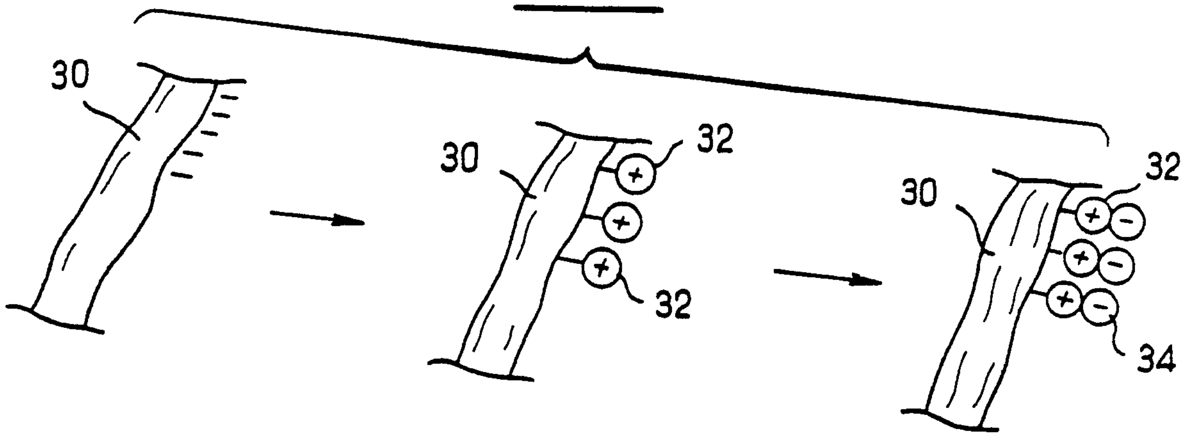


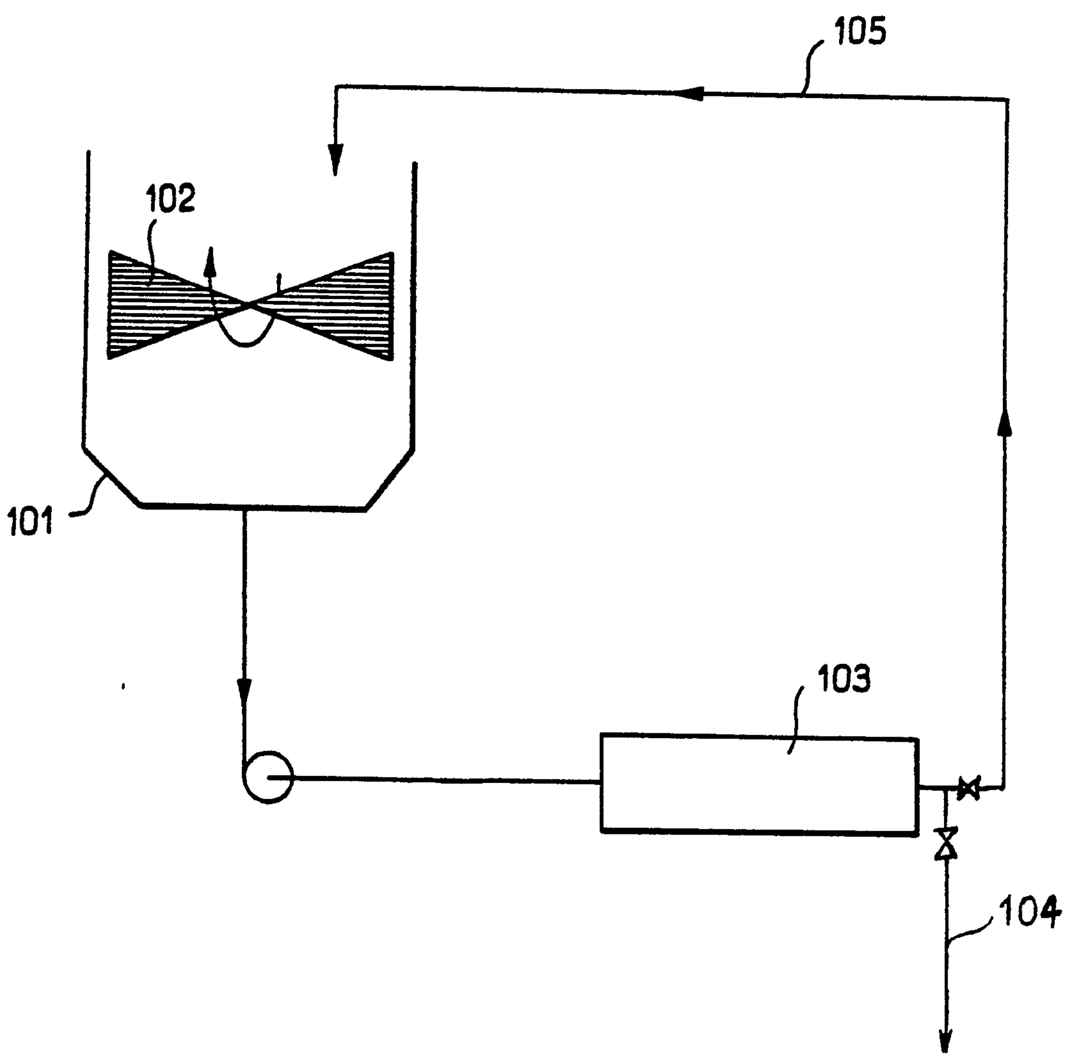


FIG_2